# EUROPEAN PATENT APPLICATION

(11) **EP 3 438 056 A1**
(43) Date of publication of application: **06.02.2019**
(21) Application number: 18152748.2
(22) Date of filing: 22.01.2018
(51) Int. Cl.: C02F 1/00, B01D 35/30

(54) **WATER PURIFIER**

(30) Priority: 01.08.2017 CN 201710648815
(71) Applicant: Foshan Shunde Midea Water Dispenser Mfg. Co., Ltd., Foshan, Guangdong 528311 (CN)
(72) Inventor: WANG, Yongping, Foshan, Guangdong 528311 (CN); WU, Weiping, Foshan, Guangdong 528311 (CN)
(74) Representative: RGTH

(57) **Abstract**

A water purifier is disclosed including a water storage device configured for storing the water; a base, configured for bearing the water storage device; and a handle shaped as annular; the handle is rotatably connected to the base, to allow the handle sleeved on lateral of the water storage device and connect to the water storage device when a certain angle formed by the handle and the base. During the process of assembling the water storage device, rotating the handle to get around the end of the water storage device that the end is near to the handle, sleeved on the outside of the water storage device, connect to the water storage device. During the process of disassembling the water storage device, rotating the handle to get around the end of the water storage device that the end is near to the handle, depart from the water storage device.

## Description

### FIELD OF THE INVENTION

The present invention relates to a field of purification system, and in particular to a water purifier and a water purification system.

### Background of the invention

Quenching thirst is our big, grand challenge, water has many unhealthy material is an undisputable fact, this is an obvious reason why people has been improving awareness on healthy water, as a result, the purification of water is very popular on the market.

The conventional water purifier includes a membrane filter, a valve, a pump, a water storage bag etc. Because the water storage bag is made by flexible material, the water storage bag during assembling needs other fixed components for fixing. However, when the water storage bag needs to be replaced, firstly disassemble the fixed components, then the water storage bag can be taken out which may complicate replacement procedures, and it is not convenient for replacing the water storage bag.

### SUMMARY OF THE INVENTION

The present disclosure gets involved in a water purifier, aims to mount and disassemble the water storage device conveniently.

To realize the above aim, the present disclosure relates to a water purifier including:
a water storage device, configured for storing the water;
a base, configured for bearing the water storage device;
a handle, shaped as annular, the handle is rotatably connected to the base, to allow the handle sleeved on lateral of the water storage device and fixedly connected to the water storage device when the handle forms a certain angle with the base during rotating with the base.

Preferably, between the handle and the water storage device has a stationary part and a mating part matched with each other.

When the handle is sleeved on the lateral of the water storage device, the stationary part and the mating part are fixed to ensure fixed connection of the handle with the water storage device.

Preferably, the stationary part is a positioning convex carried on the inside of the handle, the positioning convex has a radially extending first convex and a second convex, the first convex and the second convex are interval set around the periphery of the handle.

The mating part is a positioning groove carried on the outside of the water storage device, one sidewall of the positioning groove is propped to the first convex, the other sidewall of the positioning groove is propped to the second convex.

Preferably, the handle includes two oppositely arranged link arms, a limiting arm configured for connecting the two link arms; a positioning convex is carried on the side of the link arm that the side thereof faces with the other link arm.

Two assembling stations are interval carried on the surface of the base that the surface thereof faces with the surface of the handle; each assembling station is rotatably connected to an end of the link arm that the end thereof is far away from the limiting arm.

Preferably, two protuberances are interval carried on outside periphery of the water storage device, each protuberance is propped to the link arm.

Preferably, an interface is carried on the adjacency surface of the base to the handle.

A plug is carried on a surface of the water storage device that the surface thereof faces with the base, for plugging into the interface.

At least one link arm has a push rod extending from an end of the link arm to the other link arm.

When the handle rotates with the base and drainages water from the water storage device, the push rod is propped to the water storage device to push the water storage device moving away from the base, so as to release a joint of the water storage device from the interface of the base.

Preferably, a limiting convex is carried on the outside of the water storage device; the limiting convex is propped to the handle to limit the rotating of the handle to the base, so as to cause the handle departing from the water storage device.

Preferably, a position of the water storage device that the position thereof is near the handle and away from corners of the base comprises a recess for avoiding the handle rotating; center of the recess depresses to the direction of the base.

Preferably, a positioning convex rib is carried on the surface of the base, facing with the water storage device; the positioning convex rib is propped to the water storage device for positioning the water storage device, when the water storage device is fixedly connected to the handle.

The present disclosure is further involved in a water purification system utilizing a water purifier including:
a water storage device, configured for storing water;
a base, configured for bearing the water storage device;
a handle, shaped as annular; the handle is rotatably connected to the base, to allow the handle sleeved on lateral of the water storage device and fixedly connected to the water storage device when the handle forms a certain angle with the base during relatively rotating with the base.

The technical schemes of the present disclosure by means of the annular handle rotatably connecting to the base, the handle may rotate aroun the base. During the process of assembling the water storage device, just rotating the handle to get around the end of the water storage device that the end thereof is near to the handle, then sleeved on the lateral of the water storage device, and fixedly connected to the water storage device. During the process of disassembling the water storage device, just rotating the handle to get around the end of the water storage device that the end thereof is near to the handle, then the handle will depart from the water storage device. In this way, it is convenient for assembling and disassembling the water storage device.

### BRIEF DESCRIPTION OF THE DRAWINGS

To illustrate the technical solutions according to the embodiments of the present invention or in the prior art more clearly, the accompanying drawings for describing the embodiments or the prior art are introduced briefly in the following. Apparently, the accompanying drawings in the following description are only about some embodiments of the present invention, and persons of ordinary skill in the art can derive other drawings from the accompanying drawings without creative efforts.
Fig. 1 shows a schematic diagram of a water purifier of the first embodiment of the present disclosure;
Fig. 2 shows a schematic diagram of the water purifier in another status in Fig. 1;
Fig. 3 shows a schematic diagram of the handle in Fig. 1;
Fig. 4 shows a schematic diagram of a joint of the water storage device in Fig. 1;
Fig. 5 shows a schematic diagram of assembly of the handle and the base in Fig. 1;
Fig. 6 shows an amplification diagram of the section A in Fig. 5.

### Description of reference signs:

| Reference sign | Term | Reference sign | Term |
|---|---|---|---|
| 100 | Water purifier | 21 | Assembling station |
| 10 | Water storage device | 12 | Protuberance |
| 20 | Base | 13 | Machining plane |
| 30 | Handle | 22 | Interface |
| 31 | Positioning convex | 14 | Plug |
| 311 | First convex | 34 | Push rod |
| 312 | Second convex | 15 | Limiting convex |
| 11 | Positioning groove | 35 | Limiting protuberance |
| 32 | Link arm | 16 | Recess |
| 33 | Limiting arm | 23 | Positioning convex rib |

Objective achieving, function features, and advantages of the present disclosure are further described with reference to the embodiments and the accompany drawings.

### DETAILED DESCRIPTION OF THE EMBODIMENTS

Technical solutions of the present invention are further described in detail with reference to the accompanying drawings and embodiments. It is to be understood that the specific embodiments described herein are merely used for describing the present invention, but are not intended to limit the present invention.

It is to be understood that, all the directional instructions in the present disclosure (such as top, down, left, right, front, back......) can only be used for explaining relative position relations, moving condition of the elements under a special form (referring to figures), and so on, if the special form changes, the directional instructions changes accordingly.

In addition, the descriptions, such as the "first", the "second" in the present disclosure, can only be used for describing the aim of description, and cannot be understood as indicating or suggesting relative importance or impliedly indicating the number of the indicated technical character. Therefore, the character indicated by the "first", the "second" can express or impliedly include at least one character. In the description of the present disclosure, "a plurality of" means at least two, such as two, three, and so on, unless specifically limited otherwise.

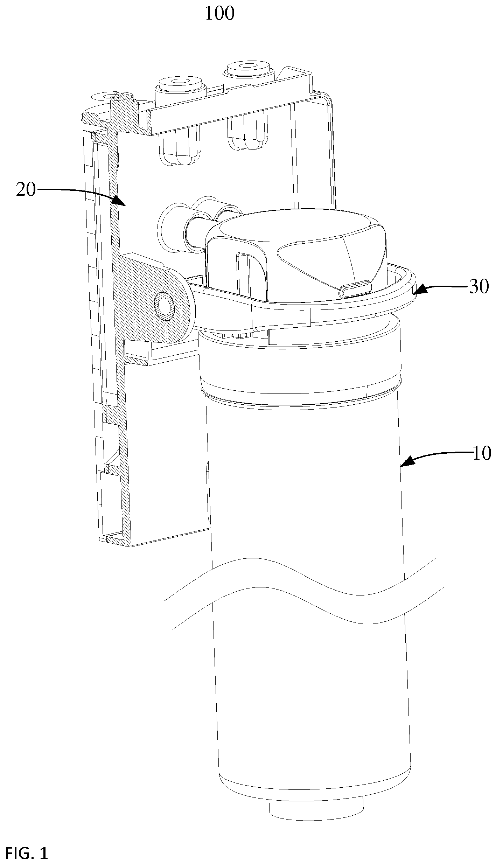

The present disclosure relates to a water purifier, as shown in Fig. 1, Fig. 1 shows a schematic diagram of a water purifier of the first embodiment of the present disclosure.

The water purifier 100 is configured for performing water treatment, including a membrane filter (not shown), a water board (not shown), a water storage device 10, a base 20, and a handle 30 etc.

The water storage device 10 is a container that is waterway connected to the water board to deposit the water produced via the membrane filter temporarily. The water storage device 10 may be a flexible bag, a water tank and a water jug etc. for storing water, there is no further description herein.

The base 20 is a load-bearing role in the water purifier 100, which is mainly for securing and assembling the membrane filter, the water storage device 10 and other components. It needs to illustrate, in the water purifier 100, if the intensity of the water board is large enough, the water board may be used as the base 20. Preferably, in the embodiments of the present disclosure, the base 20 is formed by the water board of the water purifier 100, thus cancelling the base 20 in the water purifier 100, and simplifying the structure of the water purifier 100, which is beneficial for assembling the water purifier 100.

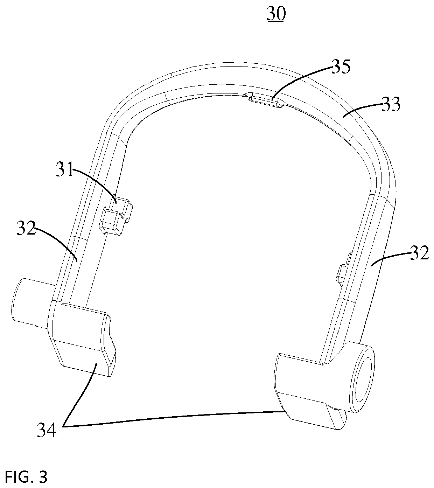

The handle 30 is shaped as annular, rotatably connected to the base 20, as shown in Fig. 3. It needs to illustrate, the handle 30 may be a closed ring, but also an unclosed ring, only ensuring the handle 30 to be sleeved on the lateral of the water storage device 10.

In addition, it needs to illustrate, the handle 30 is rotatably assembling on the base 20, the axial is arranged in parallel with the base 22, as well as perpendicular with the base 20. How the handle 30 is rotatably assembled on the base 20 has no specific limitation here.

With reference to Fig. 1, during the process of assembling the water storage device 10, arranging the water storage device 10 at the side of handle 30, facing with the base 20; then rotating the handle 30, enabling the handle 30 to get around the end of the water storage device 10 that the end thereof is near to the handle 30, to be sleeved on the outside of the water storage device 10, and the handle 30 rotates a certain angle to fixedly connect with the water storage device 10, therefore, the water storage device 10 fixedly connects with the base 20 is realized.

It needs to illustrate, since the handle 30 is shaped as annular, for easy to assemble or disassemble the handle 30 from the water storage device 10, in the embodiments of the present disclosure, the water storage device 10 is shaped as a long-stripe type, that is the water storage device 10 may be partly long-stripe type or long-stripe type entirely.

Moreover, the handle 30 rotatably arranged on the base 20 may be a point of application of force to allow gripping, which is convenient for moving the base 20.

The technical schemes of the present disclosure by means of the annular-shaped handle 30 rotatably connected to the base 20, the handle 30 may relatively rotate to the base 20. During the process of assembling the water storage device 10, it only needs to rotate the handle 30, allowing the handle 30 to get around the end of the water storage device 10 that the end thereof is near to the handle 30, to be sleeved on the outside of the water storage device 10 and fixedly connect with the water storage device 10; During the process of disassembling the water storage device 10, it only needs to rotate the handle 30, allowing the handle 30 to get around the end of the water storage device 10 that the end thereof is near to the handle 30, to depart form the water storage device 10. In this way, it is convenient to assemble or disassemble the water storage device 10. Meanwhile, the present invention only by means of a handle 30 to fix the water storage device 10 which is beneficial for simplifying the structure of the water storage device 10, so as to promote the production of the water purifier 100.

It needs to illustrate, in the embodiments of the present invention, the handle 30 and the water storage device 10 is fixedly connected via a tight fit force, that is, the handle 30 is clamping the water storage device 10 tightly. Of course, the handle 30 and the water storage device 10 may be fixedly connected via structural components which are matched with each other. How to realize the connection between the handle 30 and the water storage device 10 is not specifically limited herewith.

Considering the handle 30 needs a long time to fix the water storage device 10, if the handle 30 and the water storage device 10 is connected via a tight fit force, the handle 30 is prone to be plastic deformation after a long time, thus the handle 30 fails to clamp the water storage device 10 tightly, without consequently securing the water storage device 10. In order to ensure the service life of the handle 30, an embodiment of the present invention, the handle 30 and the water storage device 10 is fixedly connected via structural components which are matched with each other. More specifically, a stationary part and a mating part are provided between the handle 30 and the storage water device 10. The handle 30 rotates relatively to the base 20 to get around the end of the water storage device 10 that the end thereof is near to the handle 30, so as to be sleeved on the outside of the water storage device 10, in this way, the stationary part and the mating part are fixedly connected, the handle 30 and the water storage device 10 can limit each other by the fixed connection of the stationary part and the mating part. That means, the water storage device 10 can't rotate with the handle 30, or move relatively with axial of the handle 30. The handle 30 can't relatively rotate around the base 20 to disassemble from the water storage device 10. Therefore, the firmness between the handle 30 and the water storage device 10 is ensured.

It needs to illustrate, the stationary part and the mating part may form a pair to appear, if the stationary part is arranged on the handle 30, then the mating part is arranged on the water storage device 10; if the stationary part is arranged on the water storage device 10, then the mating part is arranged on the handle 30; if there is no stationary part on the handle 30 and the water storage device 10, then there is no mating part on the handle 30 and the water storage device 10. How to arrange the stationary part and the mating part there is no specific limitation herein.

Furthermore, in group to fit the handle 30 with the water storage device 10, one stationary part may be arranged on the handle 30 while a plurality of the mating parts may be arranged on the water storage device 10, distributed around the periphery of the water storage device 10. In this way, the stationary part of the handle 30 may select one of the mating parts of the water storage device 10 to match with, it is convenient for the water storage device 10 to make a counterpoint to the handle 30. Therefore, the problem is avoided that if the mating part of the water storage device 10 fails counterpoint to the handle 30, the fixed connection between the handle 30 and the water storage device 10 is influenced.

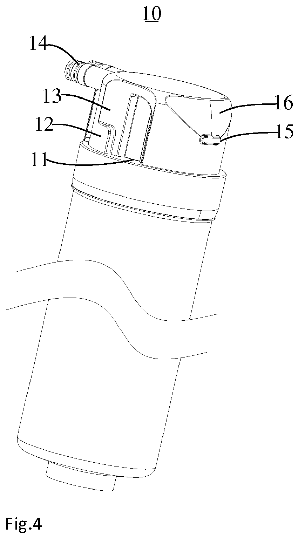

Considering the connection between the handle 30 and the water storage device 10 has to be not only tight, but also easy to disassemble, in one embodiment, the stationary part is a positioning convex 31 carried on the inside of the handle 30 and curved outward from the inside of the handle 30, the mating part is a positioning groove 11 carried on the outside of the water storage device 10. It needs to illustrate, the handle 30 is made by plastic or metal material with a certain ability of deformation. With reference to Fig. 4, before assembling the positioning convex 31 to the positioning groove 11 of the water storage device 10, the positioning convex 31 contacts with the outside of the water storage device 10, thus the handle 30 is propped to the positioning convex 31 with resulting deformation, and the deformation of the handle 30 may be recovered when the positioning convex 31 matches with the positioning groove 11 of the water storage device 10. Therefore, the positioning convex 31 may be assembled into the positioning groove 11 smoothly, and the positioning convex 31 limited by the handle 30 is not easy to be released from the positioning groove 11, so as to ensure the stability of connection between the positioning convex 31 and the positioning groove 11, therefore ensuring the stability of connection between the handle 30 and the water storage device 10.

Moreover, during the process of disassembling the water storage device 10, the working conditions of the positioning convex 31 and handle 30 are opposite to that during the process of assembling the water storage device 10, there is no further description herewith.

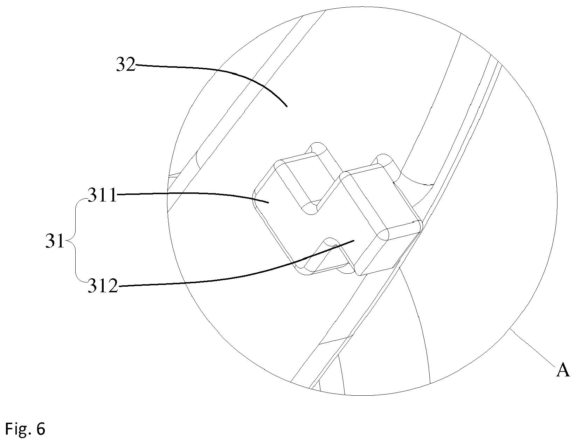

Furthermore, with reference to Fig. 6, the positioning convex 31 has a first convex 311 and a second convex 312 radially extending of the handle 30, and interval set around the periphery of the handle 30. During the process of assembling the handle 30 to the water storage device 10, since between the first convex 311 and the second convex 312 has a clearance allowing the first convex 311 and the second convex 312 to deform in the opposite direction, which is convenient for the first convex 311 and the second convex 312 clamped in the positioning groove 11, ensuring the first convex 311 to be propped to one side of the positioning groove 11 and the second convex 312 to be propped to the other side of the positioning groove 11. Therefore, it is beneficial for the handle 30 to fixedly connect with the water storage device 10, meanwhile, avoiding the problem that the first convex 311 and the second convex 312 are released from the positioning groove 11.

Apparently, the stationary part may be a buckle, the mating part may be a fastening part. Also the stationary part and the mating part may be both hooks. Of course, the stationary part and the mating part can also be other structural components without further description herein.

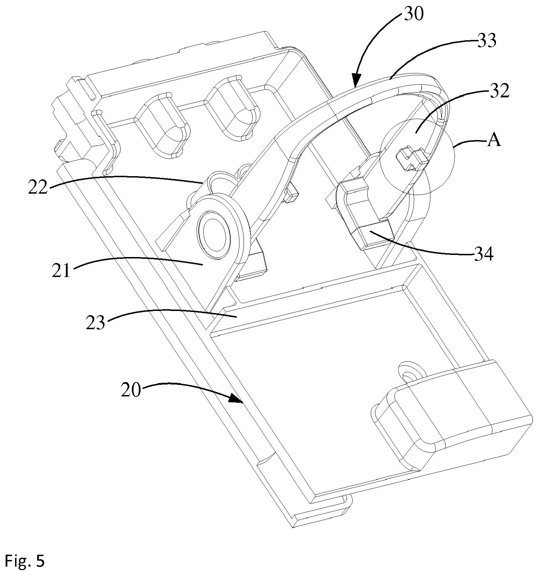

In an embodiment of the present invention, the handle 30 is shaped as an unclosed annular, that means the handle 30 has an opening, as well as two ends each of which is rotatably connected with the base 20. In this case, the opening is adjacent to the base 20. Specifically, with reference to Fig. 3 and Fig. 5, the handle 30 includes two link arms 32 which are set oppositely to each other, and a positioning arm 33 connected to two link arms 32. Two assembling stations 21 are interval carried on the surface of the base 20, the surface thereof faces with the surface of the handle 30. During the process of assembling the handle 30 and the base 20, an end of each link arm 32 of the handle 30 departing from the positioning arm 33 is rotatably connected to the assembling station 21, and so the handle 30 may relative rotate to the base 20 around a center of a line connecting the two assembling stations 21. It needs to illustrate, each link arm 32 and corresponding assembling station 21 can be rotatably connected by means of a shaft, also by means of a shaft sleeve and a shaft hole fitting each other and also by means of the shaft sleeve and the sleeve shaft fitting each other. How to rotatably connect the link arm 32 and the assembling station 21 there is no specific limitation herewith.

In the embodiment, since there is a certain distance between two ends of two link arms 32, the two link arms can produce a certain deformation, it is convenient for the rotatable connection between each link arm 32 and corresponding assembling station 21. Meanwhile, two assembling stations 21 are set on the base 20, and are protruding the base 20, consequently when the handle 30 rotates relatively to the two assembling stations 21, the rotating angle thereof is bigger than 180°, ultimately it is convenient for disassembling the handle 30 and the water storage device 10.

Apparently, in other embodiments of the present invention, a position of the handle 30 where has the opening is interval set to the base 20, that is a remaining position of the handle 30 where excludes the opening is rotatably connected with the base 20. When the handle 30 is fixedly connected with the water storage device 10. The handle 30 has the opening allowing the handle 30 to produce a deformation, hence it is convenient for the handle 30 to be sleeved on the outside of the water storage device 10 and fixed connection of the handle 30 and the water storage device 10.

To connect the water storage device 10 and the handle 30 more smoothly, with reference to Fig. 4, in the embodiment of the present invention, two protuberances 12 are interval carried on outside periphery of the water storage device 10, during the handle 30 is mounted on the water storage device 10, each protuberance 12 is propped to one link arm 32, with consequently eliminating clearances between the water storage device 10 and the link arms 32. In view of that, when the water purifier 100 is in transportation or moving the water storage device 10 falls off from the handle 30 because of suffering the impact from outside forces may be avoided, meanwhile, the two protuberance 12 provided may further improve strength of the water storage device 10, when inner water pressure of the water storage device 10 is too high the water storage device 10 is damaged may be avoided.

Apparently, the protuberances 12 may be carried on the handle 30. More specifically, a surface of each link arm 32 that the surface thereof faces with the other link arm 32 has the protuberance 12. When the handle 30 and the water storage device 10 is mounted together, the protuberance 12 of each link arm 32 is propped to the outside surface of the water storage device 10. In this case, the clearance between the handle 30 and the water storage device 10 is eliminated, enabling the handle 30 to limit the position of the water storage device 10 better, consequently avoiding the water storage device 100 to relatively rotate with the handle 30, therefore, reducing the problem that the water storage device 10 may fall off from the handle 30.

Considering it is easier to open a hole, groove or arrange a protuberance on a flat plane than on a curved surface, to reduce manufacturing difficulty, with reference to Fig. 4, in one embodiment of the present invention, two machining planes 13 dispersed around periphery of the water storage device 10 are interval carried on the outside of the water storage device 10, the abovementioned positioning groove 11 and the protuberances 12 are all carried on the machining planes 13. In this way, it may reduce difficulty for carrying the positioning groove 11 and the protuberances 12 on the machining planes 13, and it is convenient for manufacturing the water storage device 10.

To manufacture the water storage device 10 conveniently, with reference to Fig. 4 and Fig. 5, an interface 22 is carried on the surface of the base 20 that the surface thereof faces with the handle 30, a plug 14 configured for being plugged into the interface 22 is carried on one side of the base 20 of the water storage device 10. The plug 14 plugs into the interface 22, which allows the water storage device 10 to waterway connect a water board or other components in the water purifier 100. After the plug 14 of the water storage device 10 fits with the interface 22 of the base 20, the position of the water storage device 10 on the base 20 may be limited, which is beneficial for assembling the water storage device 10 onto the base 20.

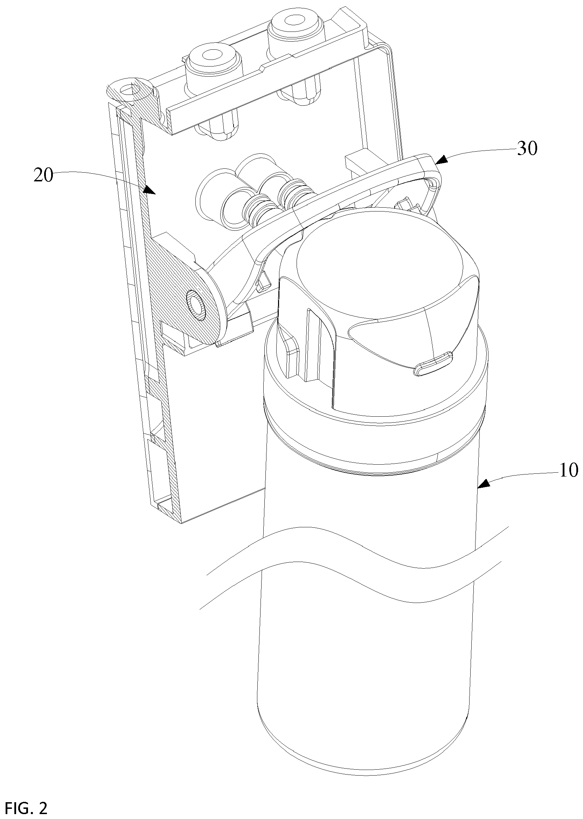

To disassemble the water storage device 10 conveniently, with reference to Fig.3, at least one of two link arms 32 of the handle 30 has a push rod 34 extending towards the other link arm 32, the push rod 34 rotates with the rotating of the base 30. With reference to Fig. 2, during the process of disassembling the water storage device 10, if rotating the handle 30, the push rod 34 may rotate with the rotating of the handle 30. And when the handle 30 gets around the end of the water storage device 10 that the end thereof is near to the handle 30, the push rod 34 starts to contact the outside surface of the water storage device 10 that the outside surface is near to the base 20. At this time, if the user continues to rotate the handle 30, the push rod 34 will push the water storage device 10 to move towards the direction of departing from the base 20, and then the push rod 34, the handle 30 and the base 20 may together form a level structure. Since a vertical distance between the side end of the handle 30 that the side end thereof is departing from the base 20 to the position where the handle 30 is rotatably connected with the base 20, is bigger than the vertical distance between the contact position of the push rod 34 and the water storage device 10 to the position where the handle 30 is rotatably connected with the base 20, which may reduce the force imposed by the user, thus it is convenient for disassembling the water storage device 10 from the base 20.

To mount the handle 30 with the water storage device 10 more firmly, with reference to Fig. 3 and Fig. 4, in an embodiment of the present invention, the outside surface of the water storage device 10 has a limiting convex 15. During the process of assembling the handle 30 to the water storage device 10, the handle 30 gets around the end of the water storage device 10 that the end thereof is near to the handle 30 as well as the limiting convex 15, the handle 30 will be propped to the limiting convex 15, which avoids the water storage device 10 to be released from the handle 30. In view of that, the assembling of the handle 30 to the water storage device 30 is stronger.

Furthermore, with reference to Fig. 3, a limiting protuberance 35 is carried on the handle 30, after the handle 30 gets around the end of the water storage device 10 that the end thereof is near to the handle 30 and the limiting convex 15, the limiting protuberance 35 will be propped to the limiting convex 15, which ensures interaction between the limiting convex 15 and the handle 30 more stable, therefore the connection between the water storage device 10 and the handle 30 is more stable.

It needs to illustrate, corners of the water storage device 10 are usually designed as right angles, to ensure the handle 30 being able to get around the right angle of the water storage device that the right angle thereof departs from the base 20, a diameter of the handle 30 is bigger than the perpendicular distance from the right angle aforementioned to the position where the handle 30 is rotataly connected to the base 20. When the handle 30 is sleeved on the outside of the water storage device 10, there is a big clearance from the position of the handle 30 that the position thereof departs from the base 20 to the water storage device 10, in this way, the handle 30 will take up comparatively big assembling space. For that reason, in an embodiment of the present invention, with reference to Fig. 1 and Fig. 4, the end of the water storage device 10 that the end thereof is near to the handle 30 is designed to be depressed towards the base 20, to form a recess 16. In this way, the perpendicular distance from the recess 16 to the center that the handle 30 rotates around is roughly equivalent to the diameter of the handle 30. Therefore, when the handle 30 has been mounted with the water storage device 10, the clearance between the handle 30 and the water storage device 10 is not too big, then the assembling space that the handle 30 takes up is further reduced, hence it is beneficial for shrinking the volume of the water purifier 100.

To mount the water storage device 10 more smoothly, in an embodiment of the present invention, with reference to Fig. 5, a positioning convex rib 23 is carried on the surface of the base 20 that the surface thereof faces with the water storage device 10; the positioning convex rib 23 is propped to the end of the water storage device 10 that the end thereof departs from the handle 30 when the handle 30 is mounted with the water storage device 10, which avoids the end of the water storage device 10 that the end thereof departs from the handle 30 randomly swags around the handle 30 working as a shaft. In this way, assembling the water storage device 10 to the base 20 is more stable.

It needs to illustrate, in the water purifier 100, the water storage device 10 is located along the vertical direction. The assembling of the water storage device 10 to the base 20 along the vertical direction is guaranteed by means of the positioning convex rib 23.

Furthermore, a positioning groove (not shown) is carried on the surface of the positioning convex rib 23 propped to the water storage device 10. Thus, the position of the end of the water storage device 10 that the end thereof is far away from the handle 30 may be better limited, which may avoid the water storage device 10 swags relatively to the base 20 during the water purifier 100 works, and ultimately cause the water storage device 10 falls off from the handle 30.

A water purification system is further disclosed, the water purification system includes the water purifier whose structural characters are referred to the above embodiments. Due to the water purification system adopts all of the technical schemes, at least all of the advantages brought into by the above embodiments would not be interpreted herewith.

The foregoing descriptions are merely embodiments of the present disclosure, and are not intended to limit the scope of the present disclosure. An equivalent structural or equivalent process alternation made by using the content of the specification and drawings of the present disclosure, or an application of the content of the specification and drawings directly or indirectly to another related technical field, shall fall within the protection scope of the present disclosure.

## Claims

1. A water purifier comprising:
a water storage device, configured for storing the water;
a base, configured for bearing the water storage device; and
a handle, shaped as annular;
wherein the handle is rotatably connected to the base, to allow the handle sleeved on lateral of the water storage device and fixedly connected to the water storage device when the handle forms a certain angle with the base during rotating around the base.

2. The water purifier of claim 1, wherein between the handle and the water storage device has a stationary part and a mating part matched with each other; when the handle is sleeved on the lateral of the water storage device, the stationary part and the mating part are fixed to ensure fixed connection of the handle with the water storage device.

3. The water purifier of claim 2, wherein the stationary part is a positioning convex carried on the inside of the handle; the positioning convex has a radially extending first convex and second convex; the first convex and the second convex are interval set around the periphery of the handle;
the mating part is a positioning groove carried on the outside of the water storage device; one sidewall of the positioning groove is propped to the first convex; the other sidewall of the positioning groove is propped to the second convex.

4. The water purifier of claim 3, wherein the handle comprises two oppositely arranged link arms and a limiting arm connected the two link arms; wherein a positioning convex is carried on the side of the link arm that the side thereof faces with the other link arm;
two assembling stations are interval carried on the surface of the base that the surface thereof faces with the surface of the handle; each assembling station is rotatably connected to an end of the link arm that the end thereof is far away from the limiting arm.

5. The water purifier of claim 4, wherein two protuberances are interval carried on outside periphery of the water storage device, each protuberance is propped to the link arm.

6. The water purifier of claim 4, wherein an interface is carried on the adjacency surface of the base to the handle;
a plug is carried on a surface of the water storage device that the surface thereof faces with the base, for plugging the interface;
at least one link arm has a push rod extending from an end of the link arm to the other link arm;
when the handle rotates with the base and drainages water from the water storage device, the push rod is propped to the water storage device to push the water storage device moving away from the base, so as to release a joint of the water storage device from the interface of the base.

7. The water purifier of any one of claims 1 to 6, wherein a limiting convex is carried on the outside of the water storage device, the limiting convex is propped to the handle to limit the relative rotating of the handle around the base, so as to cause the handle departing from the water storage device.

8. The water purifier of any one of claims 1 to 6, wherein a position of the water storage device that the position thereof is near the handle and away from corners of the base comprises a recess, for avoiding the handle to rotate; the center of the recess depresses along the direction of the base.

9. The water purifier of any one of claims 1 to 6, wherein a positioning convex rib is carried on the surface of the base that the surface thereof faces with the water storage device; the positioning convex rib is propped to the water storage device for limiting position of the water storage device when the water storage device is fixedly connected to the handle.

10. A water purification system comprising the water purifier of any one of claims 1 to 9.
